# EUROPÄISCHE PATENTSCHRIFT

(11) **EP 4 051 408 B1**
(45) Veröffentlichungstag und Bekanntmachung des Hinweises auf die Patenterteilung: **19.03.2025**
(21) Anmeldenummer: 19797685.5
(22) Anmeldetag: 31.10.2019
(51) Int. Cl.: B01D 33/067, B01D 33/09

(54) **DRUCKDREHFILTER**
ROTARY PRESSURE FILTER
FILTRE SOUS PRESSION ROTATIF

(43) Veröffentlichungstag der Anmeldung: 07.09.2022
(73) Patentinhaber: BHS-Sonthofen GmbH, 87527 Sonthofen (DE)
(72) Erfinder: DRESCHER, Frederik, 87527 Sonthofen (DE); ELSÄSSER, Lukas, 87527 Ofterschwang (DE); SÜSS, Wolfgang, 87527 Sonthofen (DE); KÄMMERER, Steffen, 87509 Immenstadt (DE); SCHÄFER, Martin, 87527 Sonthofen (DE)
(74) Vertreter: Weickmann & Weickmann PartmbB
(86) Internationale Anmeldenummer: PCT/EP2019/079809
(87) Internationale Veröffentlichungsnummer: WO 2021/083522

(56) Entgegenhaltungen:
- WO-A1-02/100512
- WO-A2-2009/135987
- DE-B- 1 204 628
- DE-C1- 19 654 165
- DE-T2- 60 007 940
- US-A- 4 182 680
- US-A- 4 821 536

## Beschreibung

Die vorliegende Erfindung betrifft einen Druckdrehfilter, welcher dazu geeignet ist, zur Behandlung von Medizinprodukten und/oder Lebensmitteln verwendet zu werden, wobei der Druckdrehfilter umfasst: eine Filtertrommel, welche um eine Rotationsachse rotierbar ist, eine Mehrzahl von Filterzellen, welche entlang eines äußeren Umfangs der Filtertrommel an dieser angeordnet sind, ein Gehäuse, welches die Filtertrommel umgibt, wobei zwischen der Filtertrommel und dem Gehäuse ein Prozessraum gebildet ist, und wenigstens ein Trennelement, welches den Prozessraum in eine Mehrzahl von Behandlungszonen unterteilt, wobei wenigstens einer Behandlungszone ein Fluideinlass zugeordnet ist, über welchen Fluid in die jeweilige Behandlungszone eingeführt werden kann.

Die Anmelderin vertreibt seit vielen Jahren Druckfilter. Bei derartigen Druckdrehfiltern wird eine Suspension, welche ein Gemisch aus Flüssigkeit und Feststoffen ist, auf eine rotierende Filtertrommel aufgebracht. Die Filtertrommel ist derart ausgebildet, dass Flüssigkeit der Suspension durch eine Wandung der Filtertrommel hindurchtreten kann, wohingegen Feststoffe der Suspension an einer Oberfläche der Filtertrommel verbleiben. Folglich entsteht an der Oberfläche der Filtertrommel eine Feststoffschicht, welche in Fachkreisen als "Filterkuchen" bezeichnet wird.

Die Suspension bzw. der Filterkuchen durchläuft über die Rotation der Filtertrommel verschiedene Behandlungszonen, wie beispielsweise Wasch- und Trocknungszonen, welche voneinander gasdicht durch die Trennelemente abgetrennt sind. Dabei kann es vorkommen, dass sich durch den Filter zurückgehaltene Feststoffe und/oder Behandlungsfluid in Hinterschnitten und engen Spalten, insbesondere im Bereich von Dichtungen, welche den Prozessraum abdichten, ansammeln.

Um mit einem Druckdrehfilter beispielsweise Lebensmittelprodukte oder pharmazeutische Produkte verarbeiten zu können, ist es aber zwingend erforderlich, dass das zu verarbeitende Produkt nicht auf Grund von Rückständen zuvor verarbeiteter Produkte verunreinigt wird.

Beispiele für Druckdrehfilter allgemeiner Art sind aus der WO 02/100512 A1, der DE 196 54 165 C1 und der DE 12 04 628 B bekannt, wobei aus Gründen der Vollständigkeit ferner die WO 2009/135987 A2 erwähnt sein soll.

Es ist daher die Aufgabe der vorliegenden Erfindung, einen Druckdrehfilter bereitzustellen, durch welchen eine ungewollte Anlagerung von Feststoffen und/oder Behandlungsfluid stark reduziert oder sogar vollständig vermieden werden kann.

Diese Aufgabe wird erfindungsgemäß durch einen Druckdrehfilter gelöst, welcher dazu geeignet ist, zur Behandlung von Medizinprodukten und/oder Lebensmitteln verwendet zu werden, wobei der Druckdrehfilter umfasst:
eine Filtertrommel, welche um eine Rotationsachse rotierbar ist,
eine Mehrzahl von Filterzellen, welche entlang eines äußeren Umfangs der Filtertrommel an dieser angeordnet sind,
ein Gehäuse, welches die Filtertrommel umgibt, wobei zwischen der Filtertrommel und dem Gehäuse ein Prozessraum gebildet ist, und
wenigstens ein Trennelement, welches den Prozessraum in eine Mehrzahl von Behandlungszonen unterteilt, wobei wenigstens einer Behandlungszone ein Gehäusestutzen zugeordnet ist, über welchen Fluid und/oder Suspension in die jeweilige Behandlungszone eingeführt werden kann,
wobei die Behandlungszonen derart voneinander getrennt sind, dass Fluid/Suspension im Wesentlichen daran gehindert wird, aus einer Behandlungszone in eine, gemäß einer Rotation der Filtertrommel, benachbarte Behandlungszone einzutreten,
wobei das wenigstens eine Trennelement dazu ausgelegt ist, eine dauerhafte Anlagerung von Fluid im Bereich des Trennelements zu verhindern,
wobei die Filtertrommel gegenüber dem Gehäuse derart abgedichtet ist, dass Fluid/Suspension wenigstens einer Behandlungszone im Wesentlichen daran gehindert wird, aus der entsprechenden Behandlungszone, anders als durch in der Behandlungszone befindliche Filterzellen, auszutreten, und dass eine dauerhafte Anlagerung von Fluid/Suspension im Bereich eines Übergangs zwischen Filtertrommel und Gehäuse verhindert wird,
wobei benachbart zu wenigstens einem der Trennelemente, insbesondere zu allen Trennelementen, in einer Richtung parallel zu der Rotationsachse der Filtertrommel, insbesondere beidseitig, ein mit einem Fluid befüllbares elastisches Hohlelement angeordnet ist, welches dazu eingerichtet ist, einen Spalt zwischen dem jeweiligen Hohlelement und dem Trennelement durch Befüllen des Hohlelements zu schließen.

Der Ausdruck "dass Fluid/Suspension wenigstens einer Behandlungszone im Wesentlichen daran gehindert wird, aus der entsprechenden Behandlungszone, anders als durch in der Behandlungszone befindliche Filterzellen, auszutreten" soll sich insbesondere auf diejenigen Behandlungszonen beziehen, in welchen der Filterkuchen gebildet oder behandelt wird. Daneben kann es aber auch Behandlungszonen geben, in welchen Behandlungsfluid von radial außen in die Behandlungszone eingeführt wird und diese auch wieder nach radial außen verlässt, beispielsweise Trocknungsluft in Trocknungszonen. Ferner kann eine Reinigungszone vorgesehen sein, in welcher ein Behandlungsfluid von radial innen durch die Filterzelle nach radial außen geleitet wird, zum Beispiel, um das Filtertuch zu reinigen. Allgemein soll der oben erwähnte Ausdruck also umfassen, dass Fluid bzw. Suspension daran gehindert werden soll, an Stellen aus einer Behandlungszone auszutreten, welche nicht zum Austritt von Fluid/Suspension vorbestimmt worden sind. Dies trifft zumeist auf einen Austritt von Fluid/Suspension aus einer Behandlungszone in Rotationsrichtung der Filtertrommel und/oder in axialer Richtung der Rotationsachse der Filtertrommel zu.

Die Holelemente können beispielsweise dazu eingerichtet sein, von einer damit verbundenen Quelle mit einem Gas, zum Beispiel Luft, befüllt zu werden.

Durch das Befüllen der Hohlelemente kann ein sich an den Prozessraum und/oder ein Trennelement axial anschließender Spalt derart geschlossen werden, dass eine Ansammlung von Feststoffen oder von Behandlungsfluid vermieden wird. So kann auch bei Trennelementen, an welchen an einer zu der Filtertrommel radial äußeren Seite ein Druckraum angeordnet ist, über welchen die Trennelemente in Richtung der Filtertrommel verlagert werden können, vermieden werden, dass Fremdstoffe in diesen Druckraum eintreten können.

Durch eine flexible Ausbildung des Hohlelements kann sich dieses nahezu beliebig an eine entsprechende Gegenfläche anlegen, so dass ein zu schließender Spalt zuverlässig geschlossen werden kann. Zusätzlich kann mit wenigstens einem Hohlelement eine Steuereinheit verbunden sein, welche dazu eingerichtet ist, einen Druckabfall in dem Hohlelement zu erfassen und ein entsprechendes Nachführen von Fluid in das Hohlelement automatisch zu veranlassen.

Als "Ansammlung" oder "Anlagerung" ist hier insbesondere zu verstehen, dass Feststoffe und/oder Behandlungsfluid, welche/welches in einen entsprechenden Spalt eingetreten sind/ist, nicht im Sinne eines Austauschs in einer selbstreinigenden Weise entfernt werden können.

Um diesen Selbst-Reinigungseffekt in denjenigen Spalten zu erreichen, welche sich konstruktiv nicht vermeiden lassen, können in dem erfindungsgemäßen Druckdrehfilter derartige Spalten, insbesondere mit einem Spaltmaß ab 0,5 mm, und zugeordnete Radien, insbesondere mit einem Radius ab 5 mm, ausgebildet sein.

Vorteilhafterweise kann einem Hohlelement ein Dichtband zugeordnet und an dieses angrenzend an dem zu schließenden Spalt angeordnet sein wobei das Dichtband vorteilhafterweise ein PTFE-Material umfassen kann. Durch die Verwendung eines Dichtbands kann die Funktion des Anschmiegens an eine Gegenfläche und damit des Abdichtens des Spalts von dem Dichtband übernommen werden, so dass dem Hohlelement in erster Linie die Funktion der Kraftaufbringung zukommen kann. Hierdurch kann das Hohlelement auch sehr dünnwandig ausgebildet sein.

Es hat sich gezeigt, dass ein PTFE umfassendes Dichtband sowohl gute Abdichtungseigenschaften als auch, im Falle von einer Abdichtung gegenüber einem relativ beweglichen Element, beispielsweise der Rotation der Filtertrommel gegenüber dem Gehäuse, gute Gleiteigenschaften aufweisen kann.

Um eine Reinigung jeglicher Oberflächen des Gehäuseinneren sicherstellen zu können, kann an der Filtertrommel eine gemeinsam mit dieser rotierende Reinigungsleiste vorgesehen sein, entlang welcher mehrere Düsen, zum Beispiel Flachstrahldüsen, angeordnet sind. Diese Reinigungsleiste kann speziell dazu eingerichtet sein, das Gehäuseinnere des Druckdrehfilters zu reinigen. Zur Reinigung der Filtertrommel und von Filterzellen bzw. darin angeordneten Filtereinheiten kann in wenigstens einer entsprechenden Behandlungszone des Gehäuses wenigstens eine weitere Reinigungsleiste mit einer Reihe von Düsen angeordnet sein. Diese Reinigungsleiste(n) ist/sind insbesondere relativ zu dem Filtergehäuse stationär. Im Fall von mehreren Reinigungsleisten, kann die Anzahl der Düsen einer zweiten Reihe im Vergleich zu einer ersten Reihe erhöht sein, um jede Stelle der Filtertrommel mit einer ausreichenden Reinigungsleistung zu erreichen. Ferner können in Behandlungszonen Ablaufbohrungen angeordnet sein, über welche das zugeführte Reinigungsfluid abgeführt werden kann. Dabei können die Ablaufbohrungen nur für einen Waschvorgang, beispielsweise zwischen der Behandlung von zwei zueinander unterschiedlichen Produkten, geöffnet und für einen Behandlungsbetrieb von Produkt verschließbar sein, insbesondere automatisch geschlossen werden.

Vorteilhafterweise können die Düsen, zumindest der gemeinsam mit der Filtertrommel rotierenden Reinigungsleiste, insbesondere aller Reinigungsleisten, zu einem Außenumfang eines Bauteils, in welchem die Düsen angeordnet sind, bündig ausgebildet sein. Sowohl bei aus dem Bauteil herausragenden als auch bei in das Bauteil versenkten Düsen besteht die Gefahr, dass sich Produkt in Kanten und Hinterschnitten ansammelt. Ein bündiges Ausbilden kann ein Ansammeln von Produkt verhindern.

Einem Hohlelement kann ferner ein Gleitelement zugeordnet sein, welches zwischen dem Hohlelement, diesem benachbart, und einer relativ zu diesem verlagerbaren Komponente des Druckdrehfilters, insbesondere der Filtertrommel, angeordnet ist. Dabei kann dieses Gleitelement insbesondere ein von dem Dichtband getrenntes Element sein, welches an einer anderen Seite des Hohlelements angeordnet sein kann als das Dichtband.

Hierbei kann das Gleitelement an einem selben Bauteil fixiert sein, an welchem auch das Hohlelement fixiert ist. Ist beispielsweise das Hohlelement mit dem Gehäuse verbunden, durch welches zum Beispiel eine mit dem Hohlelement verbundene Fluidleitung führt, so kann auch das Gleitelement mit dem Gehäuse verbunden sein, so dass eine relative Verlagerung zwischen Gleitelement und Hohlelement vermieden werden kann.

Vorteilhafterweise kann wenigstens eines aus dem Hohlelement, dem Dichtband und dem Gleitelement ringförmig ausgebildet sein. So können beispielsweise an jedem Längsende der Filtertrommel jeweils ein Dichtband, ein Hohlelement und ein Gleitelement angeordnet sein, deren ringförmige Ausbildung sich in Umfangsrichtung der Filtertrommel erstreckt. Einem ringförmigen Hohlelement können insbesondere mehrere Fluidleitungen zugeordnet sein, über welche Fluid in das bzw. aus dem Hohlelement geleitet werden kann, um dieses aufzublähen bzw. abzulassen.

Dabei kann wenigstens eines aus dem Hohlelement, dem Dichtband und dem Gleitelement im Wesentlichen konzentrisch zu der Rotationsachse der Filtertrommel angeordnet sein.

Insbesondere können die Komponenten, welche die Dichtung der Filtertrommel gegenüber dem Gehäuse bilden, zugleich die Komponenten sein, welche die Dichtung der Trennelemente gegenüber dem Gehäuse bilden. So ist es denkbar, dass ein ringförmig ausgebildetes Hohlelement, zum Beispiel in Kombination mit einem ringförmig ausgebildeten Dichtband und einem ringförmig ausgebildeten Gleitelement, an einem ersten Abschnitt eine Dichtung eines Trennelements gegenüber dem Gehäuse bereitstellt und an einem zweiten Abschnitt eine Dichtung der Filtertrommel gegenüber dem Gehäuse bereitstellt. Auch kann ein einziges Hohlelement, gegebenenfalls in Kombination mit einem Dichtband und/oder einem Gleitelement, sämtliche Dichtungen der Trennelemente des Druckdrehfilters gegenüber dem Gehäuse auf einer gleichen Seite bilden.

Der Druckdrehfilter kann ferner einen Steuerkopf umfassen, welcher relativ zu der Filtertrommel radial innen angeordnet ist, und über welchen Fluid, welches in einer jeweiligen Behandlungszone durch die Filterzellen getreten ist, den Druckdrehfilter verlässt, wobei der Steuerkopf durch Steuerkopf-Trennelemente in eine Mehrzahl von Abführzonen unterteilt ist, welche derart an der Filtertrommel und dem Steuerkopf anliegend sind, dass die Abführzonen zueinander fluidisch abgedichtet sind, wobei einem Steuerkopf-Trennelement, insbesondere allen Steuerkopf-Trennelementen, in einer Richtung parallel zu der Rotationsachse der Filtertrommel, insbesondere beidseitig, ein mit einem Fluid befüllbares Hohlelement angeordnet ist, welches dazu eingerichtet ist, durch Befüllen des Hohlelements einen Spalt zwischen dem jeweiligen Hohlelement und dem Steuerkopf-Trennelement zu schließen.

Es sei an dieser Stelle erwähnt, dass auch auf das Hohlelement, welches einem Steuerkopf-Trennelement zugeordnet ist, die oben erwähnten Merkmale, Vorteile und Eigenschaften anwendbar sind, welche in Bezug auf die oben erwähnten Hohlelemente beschrieben worden sind. So kann durch die Verwendung eines entsprechenden Hohlelements ein Steuerkopf-Trennelement insbesondere axial, in Bezug auf die Rotationsachse der Filtertrommel, abgedichtet werden.

Auch hierbei kann dem bzw. den an ein Steuerkopf-Trennelement angrenzenden Hohlelement(en) ein Dichtband und/oder Gleitelement zugeordnet und an das Hohlelement angrenzend an dem zu schließenden Spalt angeordnet sein, wobei diesbezüglich wiederum auf das oben beschriebene Dichtband/Gleitelement verwiesen sei.

In einer Weiterbildung der vorliegenden Erfindung kann in einer Filterzelle, insbesondere jeder Filterzelle, eine Filtereinheit angeordnet sein, welche ein Filtertuch trägt, welches dazu eingerichtet ist, aus einer zu filternden Suspension, welche das Filtertuch erreicht, Feststoffe ab einer durch das Filtertuch definierten Größe zurückzuhalten und Fluide passieren zu lassen, wobei das Filtertuch und ein Rahmen der Filtereinheit als separate Komponenten hergestellt und unter Verwendung eines Fügeverfahrens, insbesondere eines thermischen Fügeverfahrens, wie beispielsweise eines aus einem Schweißverfahren und einem Ultraschall-Schweißverfahren, miteinander verbunden sind, oder wobei das Filtertuch und der Rahmen gemeinsam einstückig hergestellt sind, insbesondere unter Verwendung eines 3D-Druckverfahrens. Durch das direkte Verbinden des Filtertuchs mit dem Rahmen der Filtereinheit kann auf eine Kordel, wie sie bei herkömmlichen Filtereinheiten zum Befestigen des Filtertuchs an dem Rahmen verwendet wird, verzichtet werden, wodurch wiederum durch das Verwenden der Kordel entstehende Spalte, in welchem sich Produkt anlagern kann, vermieden werden können. Insbesondere kann das Filtertuch derart mit dem Rahmen verbunden werden, dass eine Seite des Filtertuchs, an welcher sich ein Filterkuchen aufbaut, mit einer angrenzenden Fläche des Rahmens der Filtereinheit im Wesentlichen bündig abschließt. Eine entsprechende Schweißnaht kann sich somit im Wesentlichen in einer Ebene oder einer um eine Raumachse gekrümmte Fläche erstrecken.

Dabei kann ein Ultraschall-Schweißverfahren insbesondere bei der Verwendung von Kunststoffmaterialien für die Filtereinheit, das heißt den Rahmen und/oder das Filtertuch, wie beispielsweise PP/PVDF, zum Einsatz kommen.

Ferner kann bei Lagerschilden sowie an einem Steuerkopf des Druckdrehfilters ein sogenanntes "Second Containment" vorgesehen sein, über welches aus Gründen des Arbeitsschutzes ein mögliches Austreten von Gefahrstoffen zusätzlich vermieden werden kann, indem an besagten Bauteilen eine weitere Abdichtung nach außen realisiert wird. Dieses Second Containment kann insbesondere außerhalb, bevorzugt koaxial zu, einer Stopfbuchsbrille der Filtertrommel angeordnet sein. Dabei kann das Second Containment über diejenigen Befestigungselemente, zum Beispiel Gewindebolzen, mit dem Gehäuse verbunden sein, mit welchen auch die Stopfbuchsbrille der Filtertrommel am Gehäuse angebracht wird. Das Second Containment weist vorteilhafterweise wenigstens einen radialen Wellendichtring auf, welcher dazu eingerichtet ist, mit der Filtertrommel in Kontakt zu treten, um eine weitere Abdichtung bereitzustellen.

Vorteilhafterweise kann die Filtereinheit eine zumindest teilweise um den Rahmen der Filterzelle umlaufende Dichtung aufweisen, welche dazu eingerichtet ist, einen Spalt zwischen einer Filterzelle und einer darin angeordneten Filtereinheit abzudichten, wobei die Dichtung insbesondere ein Elastomer-Material umfassen kann. Die Dichtung, welche beispielsweise als eine Dichtungsschnur mit einem Rundprofil ausgebildet sein kann, kann im Montagezustand der Filtereinheit in einer jeweiligen Filterzelle so weit verformt werden, dass die Dichtung einen Spalt zwischen Filtereinheit und Filterzelle vollständig schließt, das heißt die Dichtung, welche an dem Rahmen der Filtereinheit umfänglich angeordnet ist, wird derart deformiert, dass sie in einer Richtung radial zu der Rotationsachse der Filtertrommel mit einem zugehörigen Filtertuch im Wesentlichen auf gleicher Höhe liegt. Auf diese Weise kann der Spalt und/oder Hinterschneidungen zwischen Filtereinheit und Filterzelle bzw. Filterzellenwand so geschlossen werden, dass dort angesammeltes Produkt, insbesondere Feststoffe, bei einer Reinigung der Filterzelle zuverlässig entfernt werden kann.

Um die Deformation der Dichtung der Filtereinheit hervorzurufen, kann die Filtereinheit mit der Filtertrommel verschraubt werden, insbesondere unter Verwendung von Stiftschrauben, welche von einer radial inneren Seite der Filtertrommel durch eine Wandlung der Filtertrommel in die Filtereinheit eingreifen. Ferner kann an einem Filterzellengrund, an welchem die Dichtung der Filtereinheit anliegt, eine Fase ausgebildet sein, welche eine Deformation der Dichtung nach radial außen, in Bezug auf die Filtertrommel, fördert. Um einen Raum in der Filterzelle oberhalb des Filtertuchs, das heißt einen Raum, in welchem sich ein Filterkuchen aufbaut, verkleinern zu können, können zwischen der Filtereinheit und dem Filterzellengrund Zellenunterlagen angeordnet werden. Dabei können die Zellenunterlagen in einer analogen Weise zu dem Filterzellengrund eine Fase zur Unterstützung der Deformation der Dichtung aufweisen.

Eine weitere Dichtung kann zwischen der Filtereinheit und dem Filterzellengrund in einer eine Fluid-Ablaufleitung durch die Filtereinheit umgebenden Weise angeordnet sein, so dass kein Fluid von der Ablaufleitung in einen Spalt zwischen Filtereinheit und Filterzellengrund eintreten kann.

Insbesondere kann die Filtereinheit aus der Filterzelle herausnehmbar ausgebildet sein. Somit können defekte Filtereinheiten, welche beispielsweise ein beschädigtes Filtertuch aufweisen, auf einfache Weise ausgetauscht werden.

Ferner können mit dem Gehäuse verbundene Gehäusestutzen, über welche Suspension und/oder Fluid in bzw. aus dem Prozessraum ein- bzw. abführbar ist, mit dem Gehäuse verschweißt sein. So können Verschneidungen vermieden werden, in welchen Ablagerungen stattfinden können.

Ganz allgemein kann es vorteilhaft für eine hygienegerechte Auslegung des erfindungsgemäßen Druckdrehfilters sein, wenn sämtliche Oberflächen, welche mit Suspension/Behandlungsfluid in Kontakt kommen können, Radien von mindestens 5 mm und eine Oberflächenrauheit von maximal Rz4 (µm) aufweisen.

Im Folgenden wird die vorliegende Erfindung anhand eines Ausführungsbeispiels in größerem Detail mit Bezug auf die begleitenden Zeichnungen beschrieben werden, in welchen:
- Figur 1: ein Detail eines Seitenquerschnitts eines erfindungsgemäßen Druckdrehfilters im Bereich eines Gehäuses des Druckdrehfilters zeigt;
- Figur 2: ein weiteres Detail eines Seitenquerschnitts des erfindungsgemäßen Druckdrehfilters im Bereich des Gehäuses des Druckdrehfilters zeigt;
- Figur 3: ein weiteres Detail eines Seitenquerschnitts es erfindungsgemäßen Druckdrehfilters im Bereich des Gehäuses des Druckdrehfilters zeigt;
- Figur 4: ein Detail eines Seitenquerschnitts des erfindungsgemäßen Druckdrehfilters im Bereich eines Steuerkopfs des Druckdrehfilters zeigt;
- Figur 5: einen Seitenquerschnitt einer Filterzelle des erfindungsgemäßen Druckdrehfilters zeigt; und
- Figur 6: eine Seitenquerschnittsansicht des erfindungsgemäßen Druckdrehfilters ohne Filtertrommel zeigt.

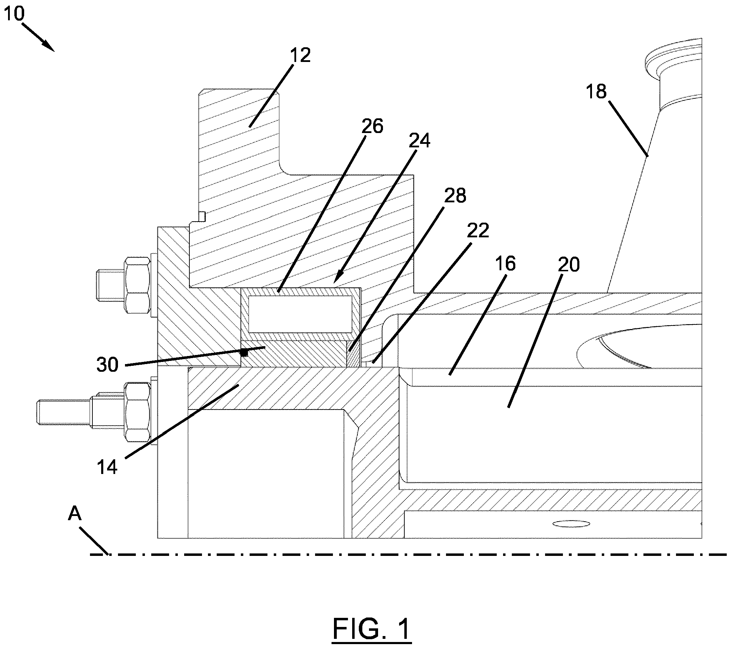

In Figur 1 ist ein erfindungsgemäßer Druckdrehfilter allgemein mit dem Bezugszeichen 10 bezeichnet. Der Druckdrehfilter 10 umfasst ein Gehäuse 12 und eine darin angeordnete Filtertrommel 14, welche um eine Rotationsachse A rotiert. Zwischen dem Gehäuse 12 und der Filtertrommel 14 ist ein Prozessraum 16 angeordnet, in welchen über einen Gehäusestutzen 18 zu filternde Suspension eingebracht werden kann. Die Suspension wird dabei in einer Filterzelle 20 der Filtertrommel 14 in flüssige und feste Anteile aufgeteilt, wobei die flüssigen Anteile der Suspension die Filterzelle 20 in Bezug auf die Filtertrommel 14 nach radial innen verlassen und feste Anteile in der Filterzelle 20 zurückgehalten werden. In einer dem Einführen von Suspension in den Prozessraum 16 nachgelagerten Behandlungszone können die in einer jeweiligen Filterzelle 20 verbleibenden Anteile der Suspension ferner mit Behandlungsfluiden, wie beispielsweise Waschflüssigkeiten oder Trocknungsluft, behandelt und anschließend ausgetragten werden.

Um zu verhindern, dass sich Suspension und/oder Behandlungsfluid dauerhaft anlagert, das heißt derart, dass es durch das Reinigen der Filterzelle beispielsweise am Ende eines Behandlungszyklus oder spätestens bei einer Reinigung vor einem Wechsel zu einem unterschiedlichen zu behandelnden Produkt nicht zuverlässig entfernt werden kann, ist in einer zu der Rotationsachse A axialen Richtung dem Prozessraum 16 bzw. einem Spalt 22, auf welchen sich der Prozessraum 16 hin an seinem axialen Ende reduziert, eine Dichtung 24 zugeordnet. Die Dichtung 24 umfasst in der in Figur 1 dargestellten Ausführungsform ein Hohlelement 26, welches über eine nicht dargestellte Fluidleitung mit Fluid befüllt werden kann, um sich aufzublähen, das heißt an Volumen zuzunehmen, oder aus welchem über die Fluidleitung Fluid aus dem Hohlelement 26 abgeführt werden kann, damit das Hohlelement 26 an Volumen abnimmt.

An das Hohlelement 26 angrenzend und zwischen dem Hohlelement 26 und dem Prozessraum 16 eingefügt ist ein Dichtband 28 angeordnet, welches dazu geeignet ist, den Prozessraum 16 gegenüber einer Außenseite hin derart abzudichten, dass kein Produkt oder Behandlungsfluid an dieser Stelle aus dem Prozessraum 16 austreten kann.

Da das Hohlelement 26 in der in Figur 1 dargestellten Ausführungsform an dem Gehäuse 12 befestigt ist, ist zwischen dem Hohlelement 26 und der Filtertrommel 14 ferner ein Gleitelement 30 angeordnet, welches mit der Filtertrommel 14 gleitend in Verbindung steht. Das Gleitelement 30 ist dabei ebenfalls an dem Gehäuse 12 angebracht.

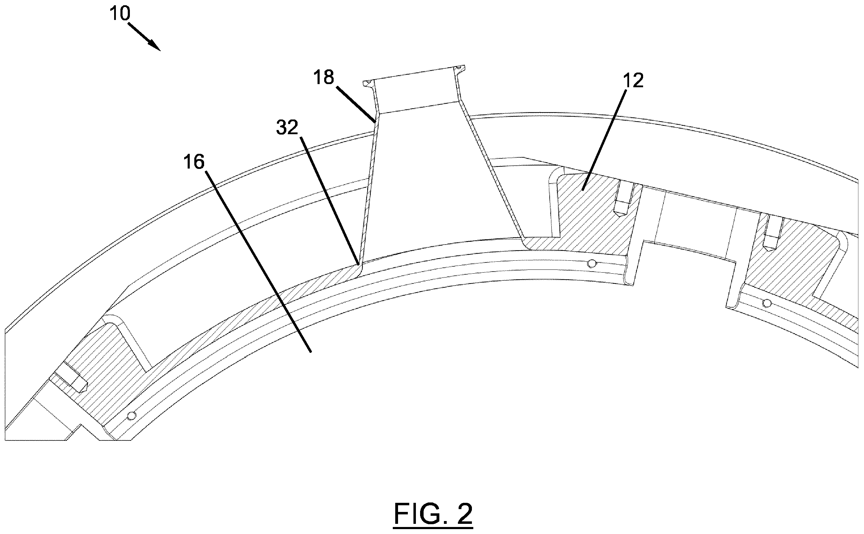

Figur 2 zeigt in einer Seitenquerschnittsansicht, wie der Gehäusestutzen 18 mit dem Gehäuse 12 der dargestellten Ausführungsform verbunden ist, ohne dass es dabei zu scharfen Übergängen oder Hinterschneidungen kommen würde. In dem gezeigten Beispiel ist der Gehäusestutzen 18 stoffschlüssig mit dem Gehäuse 12 verbunden, beispielsweise durch ein Schweißverfahren. Ein Übergang 32 zwischen dem Gehäuse 12 und dem Gehäusestutzen 18 weist daher einen glatten Verlauf unter Ausbildung eines Radius von einer dem Prozessraum 16 zugewandten Seite des Gehäuses 12 zu einer Innenseite des Gehäusestutzens 18 auf.

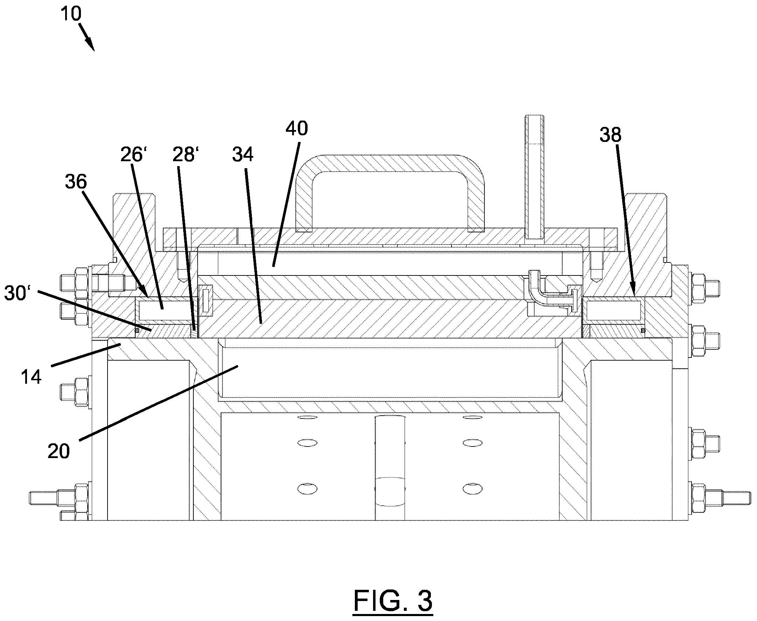

In Figur 3 ist der erfindungsgemäße Druckdrehfilter 10 in einer Schnittansicht dargestellt, deren Schnittebene durch ein Trennelement 34 verläuft, welches zwei in Rotationsrichtung der Filtertrommel 14 benachbarte Behandlungszonen gasdicht voneinander trennt. Analog zu der mit Bezug auf Figur 1 beschriebenen Dichtung 24 des Prozessraums 16, das heißt zwischen dem Gehäuse 12 und der Filtertrommel 14, ist auch an den beiden Längsenden, in Bezug auf die Rotationsachse A der Filtertrommel 14, des Trennelements 34 eine jeweilige Dichtung 36 und 38 angeordnet, welche jeweils ein Hohlelement 26', ein Dichtband 28' und ein Gleitelement 30' umfasst. Die Dichtungen 36 und 38 verhindern einerseits, dass Fremdstoffe entlang einer Kontaktfläche zwischen Trennelement 34 und Filtertrommel 14 nach axialen außen abwandern können, und andererseits, dass Fremdstoffe aus der Filterzelle 20 in einen Druckraum 40 gelangen können, welcher in einer radialen Richtung außerhalb des Trennelements 34 angeordnet ist, und über welchen eine Anpresskraft des Trennelements 34 auf die Filtertrommel 14 ausgeübt werden kann.

In einer besonderen Ausführungsform können die Dichtung 24 und die Dichtung 36 aus ein und den selben Komponenten, das heißt aus dem Hohlelement 26, dem Dichtband 28 und dem Gleitelement 30 gebildet sein. Analoges gilt natürlich für eine Dichtung 38, wobei eine zugehörige der Dichtung 24 gegenüberliegende Dichtung in Figur 1 nicht dargestellt ist.

Flüssige Anteile der Suspension als auch Behandlungsfluide, welche durch die Filterzelle 20 an der Filtertrommel 18 nach radial innen hindurchgetreten sind, werden über einen Steuerkopf 42 aus dem Druckdrehfilter 10 geleitet. Dabei kann es vorteilhaft sein, den Steuerkopf 42, zumindest teilweise analog zu der Aufteilung des Prozessraums 16 in Behandlungszonen, in Abführzonen zu unterteilen. Die Abführzonen werden durch Steuerkopf-Trennelemente 44 voneinander getrennt.

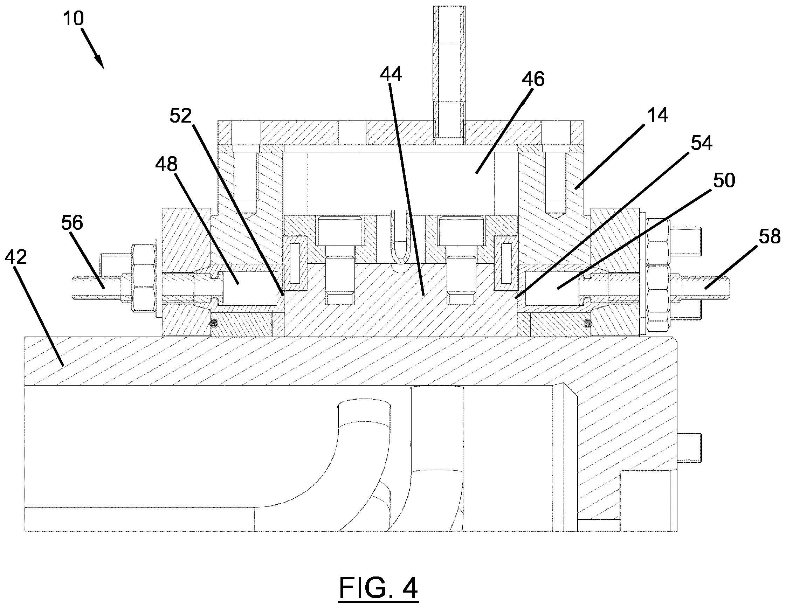

In dem dargestellten Ausführungsbeispiel sind im Gegensatz zu den Trennelementen 34 die Steuerkopf-Trennelemente 44 fest mit der Filtertrommel 14 verbunden, so dass sie zusammen mit dieser um den Steuerkopf 42 rotieren. Es ist dabei in Figur 4 zu erkennen, dass oberhalb der Steuerkopf-Trennelemente 44, das heißt in Bezug auf die Rotationsachse A radial innen, ein Steuerkopf-Druckraum 46 angeordnet ist, welcher analog zu dem Druckraum 40 derart mit Fluid befüllt werden kann, dass die Steuerkopf-Trennelemente 44 mit einem entsprechenden Anpressdruck auf den Steuerkopf 42 beaufschlagt werden können. Um ein Anlagern von Fremdstoffen an den in Bezug auf die Rotationsachse A axialen Enden eines jeweiligen Steuerkopf-Trennelements 44 verhindern zu können, sind an diesen Längsenden des Steuerkopf-Trennelements 44 jeweils Hohlelemente 48 und 50 vorgesehen, welche einen jeweiligen Spalt 52 und 54 schließen können. In Figur 4 sind außerdem Fluidleitungen 56 und 58 erkennbar, über welche die Hohlelemente 48 und 50 befüllt und abgelassen werden können. In dem gezeigten Ausführungsbeispiel sind die Fluidleitungen 56 und 58 als zentral durchbohrte Gewindebolzen ausgeführt.

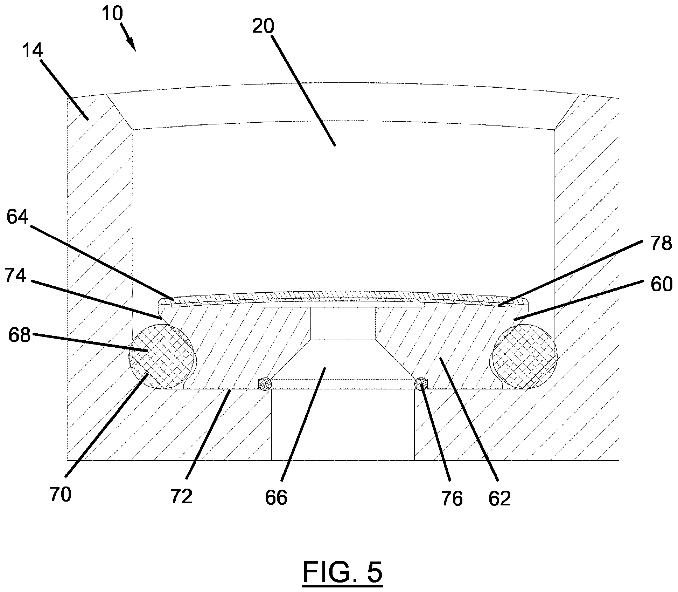

In Figur 5 ist ein Ausschnitt des erfindungsgemäßen Druckdrehfilters 10 dargestellt, welcher eine Filterzelle 20 der Filtertrommel 14 zeigt. In der Filterzelle 20 ist eine Filtereinheit 60 angeordnet, welche einen Rahmen 62 und ein an dem Rahmen 62 der Filtereinheit 60 angeordnetes Filtertuch 64 umfasst. Das Filtertuch 64 schließt mit einem umgebenden Rand des Rahmens 62 der Filtereinheit 60 bündig ab und bildet mit diesem eine in Umfangsrichtung der Filtertrommel 14 gekrümmt verlaufende Fläche aus.

In einem Inneren des Rahmens 62 ist eine Ablaufleitung 66 vorgesehen, über welche flüssige Anteile der Suspension und Behandlungsfluide, welche das Filtertuch 64 passiert haben, die Filterzelle 20 in Richtung des Steuerkopfs 42 verlassen können. Um den Rahmen 62 der Filterzelle 60 umfänglich umlaufend ist eine Dichtung 68 in Form einer Dichtschnur angeordnet. In Figur 5 ist die Dichtung 68 unkomprimiert dargestellt. In der Realität würde die Dichtung 68 jedoch durch eine Fase 70, welche an einem Filterzellengrund 72 der Filterzelle 20 ausgebildet ist, und eine Anlagefläche 74 des Rahmens 62 der Filtereinheit 60 derart deformiert werden, dass auch die Dichtung 68 im Wesentlichen die Höhe der gekrümmt verlaufenden Fläche des Filtertuchs 64 und des umgebenden Rands des Rahmens 62 erreicht.

Vorteilhafterweise kann die Ablaufleitung 66 von einer weiteren Dichtung 76 zwischen Filterzellengrund 72 und Rahmen 62 umgeben sein.

Unter dem Filtertuch 64 ist in der dargestellten Ausführungsform ein Stützgewebe 78 angeordnet, welches dazu dient, dem Filtertuch 64 eine großflächige Anlagefläche zu bieten bzw. das Filtertuch 64 davon abzuhalten, in den Rahmen 62 der Filterzelle 60 durchzuhängen. Das Stützgewebe 78 ist dabei in den Rahmen 62 versenkt, so dass sich das Filtertuch 64 bis zu einem äußeren Rand des Rahmens 62 ohne eine den Verlauf des Filtertuchs 64 störende Stufe zwischen Rahmen 62 und Stützgewebe 78 erstrecken kann.

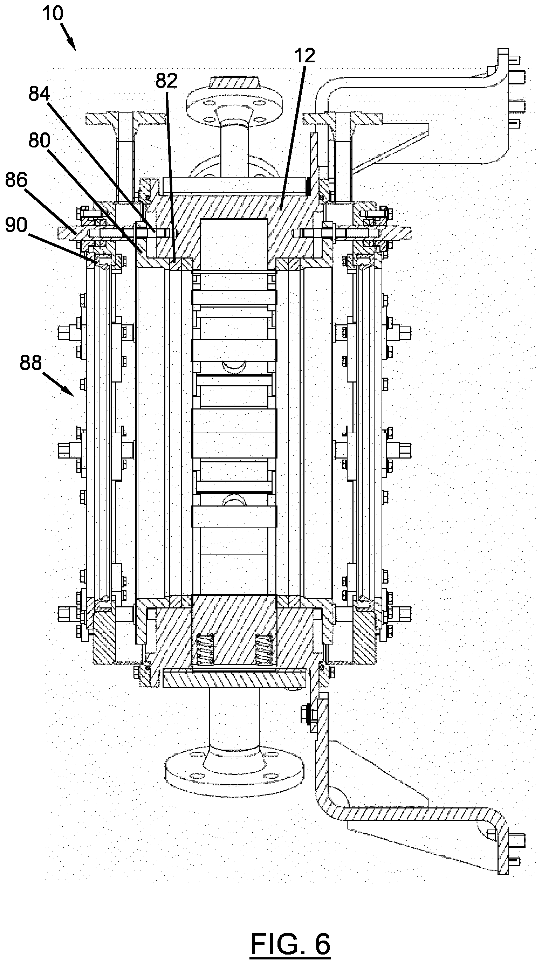

In Figur 6 ist eine Seitenquerschnittsansicht eines erfindungsgemäßen Druckdrehfilters 10 dargestellt. Die Filtertrommel 14 ist in Figur 6 nicht gezeigt. Dabei ist zu erkennen, dass mit dem Gehäuse 12 des Druckdrehfilters 10 eine Stoffbuchsbrille 80 verbunden ist, welche eine Stoffbuchspackung 82 derart gegen das Gehäuse 12 drängt, dass die Stoffbuchspackung 82 nach radial innen deformiert wird, um eine Dichtung gegenüber der Filtertrommel 14 zu bilden. Die Stoffbuchsbrille 80 ist dabei mit dem Gehäuse 12 über Gewindebolzen 84 verbunden.

An einem dem Gehäuse 12 entgegengesetzten Ende eines jeweiligen Gewindebolzens 84 ist mit diesem eine Mutter 86 verbunden, über welche ein Second Containment 88 an dem Gehäuse 12 des Druckdrehfilters 10 befestigt wird. Das Second Containment 88 umfasst einen radialen Wellendichtring 90, welcher mit der Filtertrommel 14 in Kontakt tritt. Auf diese Weise wird zusätzlich zu der Stoffbuchspackung 82 eine weitere Abdichtung gegenüber einer Außenseite des Druckdrehfilters 10 hin bereitgestellt.

## Patentansprüche

1. Druckdrehfilter (10), welcher dazu geeignet ist, zur Behandlung von Medizinprodukten und/oder Lebensmitteln verwendet zu werden, wobei der Druckdrehfilter (10) umfasst:
eine Filtertrommel (14), welche um eine Rotationsachse (A) rotierbar ist,
eine Mehrzahl von Filterzellen (20), welche entlang eines äußeren Umfangs der Filtertrommel (14) an dieser angeordnet sind,
ein Gehäuse (12), welches die Filtertrommel (14) umgibt, wobei zwischen der Filtertrommel (14) und dem Gehäuse (12) ein Prozessraum (16) gebildet ist, und
wenigstens ein Trennelement (34), welches den Prozessraum (16) in eine Mehrzahl von Behandlungszonen unterteilt, wobei wenigstens einer Behandlungszone ein Gehäusestutzen (18) zugeordnet ist, über welchen Fluid und/oder Suspension in die jeweilige Behandlungszone eingeführt werden kann,
wobei die Behandlungszonen derart voneinander getrennt sind, dass Fluid/Suspension im Wesentlichen daran gehindert wird, aus einer Behandlungszone in eine, gemäß einer Rotation der Filtertrommel (14), benachbarte Behandlungszone einzutreten,
wobei das wenigstens eine Trennelement (34) dazu ausgelegt ist, eine dauerhafte Anlagerung von Fluid im Bereich des Trennelements (34) zu verhindern,
wobei die Filtertrommel (14) gegenüber dem Gehäuse (12) derart abgedichtet ist, dass Fluid/Suspension wenigstens einer Behandlungszone im Wesentlichen daran gehindert wird, aus der entsprechenden Behandlungszone, anders als durch in der Behandlungszone befindliche Filterzellen (20), auszutreten, und dass eine dauerhafte Anlagerung von Fluid/Suspension im Bereich eines Übergangs zwischen Filtertrommel (14) und Gehäuse (12) verhindert wird,
**dadurch gekennzeichnet, dass**
benachbart zu wenigstens einem der Trennelemente (34),
insbesondere zu allen Trennelementen (34), in einer Richtung parallel zu der Rotationsachse (A) der Filtertrommel (14), insbesondere beidseitig, ein mit einem Fluid befüllbares elastisches Hohlelement (26') angeordnet ist, welches dazu eingerichtet ist, einen Spalt zwischen dem jeweiligen Hohlelement (26') und dem Trennelement (34) durch Befüllen des Hohlelements (26') zu schließen.

2. Druckdrehfilter (10) nach Anspruch 1,
**dadurch gekennzeichnet, dass** einem Hohlelement (26, 26') ein Dichtband (28, 28') zugeordnet und an dieses angrenzend an dem zu schließenden Spalt angeordnet ist, wobei das Dichtband (28, 28') vorteilhafterweise ein PTFE-Material umfasst.

3. Druckdrehfilter (10) nach Anspruch 1 oder 2,
**dadurch gekennzeichnet, dass** an der Filtertrommel eine gemeinsam mit dieser rotierende Reinigungsleiste vorgesehen ist, entlang welcher mehrere Düsen, zum Beispiel Flachstrahldüsen, angeordnet sind.

4. Druckdrehfilter (10) nach einem der Ansprüche 1 bis 3,
**dadurch gekennzeichnet, dass** einem Hohlelement (26, 26') ein Gleitelement (30, 30') zugeordnet ist, welches zwischen dem Hohlelement (26, 26'), diesem benachbart, und einer relativ zu diesem verlagerbaren Komponente des Druckdrehfilters (10), insbesondere der Filtertrommel (14), angeordnet ist.

5. Druckdrehfilter (10) nach Anspruch 4,
**dadurch gekennzeichnet, dass** das Gleitelement (30, 30') an einem selben Bauteil fixiert ist, an welchem auch das Hohlelement (26, 26') fixiert ist.

6. Druckdrehfilter (10) nach einem der Ansprüche 1 bis 5, gegebenenfalls nach Anspruch 2 und/oder Anspruch 4,
**dadurch gekennzeichnet, dass** wenigstens eines aus dem Hohlelement (26, 26'), dem Dichtband (28, 28') und dem Gleitelement (30, 30') ringförmig ausgebildet ist.

7. Druckdrehfilter (10) nach Anspruch 6, gegebenenfalls nach Anspruch 2 und/oder Anspruch 4,
**dadurch gekennzeichnet, dass** wenigstens eines aus dem Hohlelement (26, 26'), dem Dichtband (28, 28') und dem Gleitelement (30, 30') im Wesentlichen konzentrisch zu der Rotationsachse (A) der Filtertrommel (14) angeordnet ist.

8. Druckdrehfilter (10) nach einem der Ansprüche 1 bis 7,
**dadurch gekennzeichnet, dass** die Komponenten, welche die Dichtung (24) der Filtertrommel (14) gegenüber dem Gehäuse (12) bilden, zugleich die Komponenten sind, welche die Dichtung (36) der Trennelemente (34) gegenüber dem Gehäuse (12) bilden.

9. Druckdrehfilter (10) nach einem der Ansprüche 1 bis 8,
**dadurch gekennzeichnet, dass** der Druckdrehfilter (10) ferner einen Steuerkopf (42) umfasst, welcher relativ zu der Filtertrommel (14) radial innen angeordnet ist, und über welchen Fluid, welches in einer jeweiligen Behandlungszone durch die Filterzellen (20) getreten ist, den Druckdrehfilter (10) verlässt,
wobei der Steuerkopf (42) durch Steuerkopf-Trennelemente (44) in eine Mehrzahl von Abführzonen unterteilt ist, welche derart an der Filtertrommel (14) und dem Steuerkopf (42) anliegend sind, dass die Abführzonen zueinander fluidisch abgedichtet sind,
wobei einem Steuerkopf-Trennelement (44), insbesondere allen Steuerkopf-Trennelementen (44), in einer Richtung parallel zu der Rotationsachse (A) der Filtertrommel (14), insbesondere beidseitig, ein mit einem Fluid befüllbares Hohlelement (48, 50) angeordnet ist, welches dazu eingerichtet ist, durch Befüllen des Hohlelements (48, 50) einen Spalt (52, 54) zwischen dem jeweiligen Hohlelement (48, 50) und dem Steuerkopf-Trennelement (44) zu schließen.

10. Druckdrehfilter (10) nach Anspruch 9,
**dadurch gekennzeichnet, dass** dem bzw. den an ein Steuerkopf-Trennelement (44) angrenzenden Hohlelement(en) (48, 50) ein Dichtband zugeordnet und an das Hohlelement (48, 50) angrenzend an dem zu schließenden Spalt (52, 54) angeordnet ist.

11. Druckdrehfilter (10) nach einem der Ansprüche 1 bis 10,
**dadurch gekennzeichnet, dass** in einer Filterzelle (20), insbesondere jeder Filterzelle (20), eine Filtereinheit (60) angeordnet ist, welche ein Filtertuch (64) trägt, welches dazu eingerichtet ist, aus einer zu filternden Suspension, welche das Filtertuch (64) erreicht, Feststoffe ab einer durch das Filtertuch (64) definierten Größe zurückzuhalten und Fluide passieren zu lassen,
wobei das Filtertuch (64) und ein Rahmen (62) der Filtereinheit (60) als separate Komponenten hergestellt und unter Verwendung eines Fügeverfahrens, insbesondere eines thermischen Fügeverfahrens, wie beispielsweise eines aus einem Schweißverfahren und einem Ultraschall-Schweißverfahren, miteinander verbunden sind, oder wobei das Filtertuch (64) und der Rahmen (62) gemeinsam einstückig hergestellt sind, insbesondere unter Verwendung eines 3D-Druckverfahrens.

12. Druckdrehfilter (10) nach einem der Ansprüche 1 bis 11,
**dadurch gekennzeichnet, dass** ferner bei Lagerschilden sowie an dem Steuerkopf (42) des Druckdrehfilters (10) ein Second Containment (88) vorgesehen ist.

13. Druckdrehfilter (10) nach Anspruch 11 oder 12,
**dadurch gekennzeichnet, dass** die Filtereinheit (60) eine zumindest teilweise um den Rahmen (62) der Filterzelle (20) umlaufende Dichtung (68) aufweist, welche dazu eingerichtet ist, einen Spalt zwischen einer Filterzelle (20) und einer darin angeordneten Filtereinheit (60) abzudichten, wobei die Dichtung (68) insbesondere ein Elastomer-Material umfasst.

14. Druckdrehfilter (10) nach einem der Ansprüche 11 bis 13,
**dadurch gekennzeichnet, dass** die Filtereinheit (60) aus der Filterzelle (20) herausnehmbar ausgebildet ist.

15. Druckdrehfilter (10) nach einem der Ansprüche 1 bis 14,
**dadurch gekennzeichnet, dass** mit dem Gehäuse (12) verbundene Gehäusestutzen (18), über welche Suspension und/oder Fluid in bzw. aus dem Prozessraum (16) ein- bzw. abführbar ist, mit dem Gehäuse (12) verschweißt sind.

## Claims

1. Rotary pressure filter (10) suitable for use in the treatment of medical products and/or foodstuffs, wherein the rotary pressure filter (10) comprises:
a filter drum (14) which is rotatable about an axis of rotation (A),
a plurality of filter cells (20) which are arranged on the filter drum (14) along an outer circumference thereof,
a housing (12) which surrounds the filter drum (14), wherein a process space (16) is formed between the filter drum (14) and the housing (12), and
at least one separating element (34) which divides the process space (16) into a plurality of treatment zones, wherein there is associated with at least one treatment zone a housing connector (18) via which fluid and/or suspension can be introduced into the respective treatment zone,
wherein the treatment zones are separated from one another in such a manner that fluid/suspension is substantially prevented from passing from one treatment zone into an adjacent, according to a rotation of the filter drum (14), treatment zone,
wherein the at least one separating element (34) is designed to prevent a permanent accumulation of fluid in the region of the separating element (34),
wherein the filter drum (14) is sealed with respect to the housing (12) in such a manner that fluid/suspension of at least one treatment zone is substantially prevented from leaving the corresponding treatment zone other than through filter cells (20) located in the treatment zone, and that a permanent accumulation of fluid/suspension in the region of a transition between the filter drum (14) and the housing (12) is prevented,
**characterised in that**
a resilient hollow element (26') which can be filled with a fluid is arranged adjacent to at least one of the separating elements (34), in particular adjacent to all the separating elements (34), in a direction parallel to the axis of rotation (A) of the filter drum (14), in particular on both sides, which hollow element is adapted, by filling of the hollow element (26'), to close a gap between the respective hollow element (26') and the separating element (34).

2. Rotary pressure filter (10) according to claim 1,
**characterised in that** a sealing strip (28, 28') is associated with a hollow element (26, 26') and is arranged adjacent thereto at the gap that is to be closed, wherein the sealing strip (28, 28') advantageously comprises a PTFE material.

3. Rotary pressure filter (10) according to claim 1 or 2,
**characterised in that** there is provided at the filter drum a cleaning bar which rotates together with the filter drum and along which there are arranged a plurality of nozzles, for example flat jet nozzles.

4. Rotary pressure filter (10) according to any one of claims 1 to 3,
**characterised in that** there is associated with a hollow element (26, 26') a sliding element (30, 30') which is arranged between the hollow element (26, 26'), adjacent thereto, and a component of the rotary pressure filter (10) that is displaceable relative thereto, in particular the filter drum (14).

5. Rotary pressure filter (10) according to claim 4,
**characterised in that** the sliding element (30, 30') is fixed to the same component to which the hollow element (26, 26') is also fixed.

6. Rotary pressure filter (10) according to any one of claims 1 to 5, optionally according to claim 2 and/or claim 4,
**characterised in that** at least one of the hollow element (26, 26'), the sealing strip (28, 28') and the sliding element (30, 30') is annular.

7. Rotary pressure filter (10) according to claim 6, optionally according to claim 2 and/or claim 4,
**characterised in that** at least one of the hollow element (26, 26'), the sealing strip (28, 28') and the sliding element (30, 30') is arranged substantially concentrically to the axis of rotation (A) of the filter drum (14).

8. Rotary pressure filter (10) according to any one of claims 1 to 7,
**characterised in that** the components that form the seal (24) between the filter drum (14) and the housing (12) are at the same time the components that form the seal (36) between the separating elements (34) and the housing (12).

9. Rotary pressure filter (10) according to any one of claims 1 to 8,
**characterised in that** the rotary pressure filter (10) further comprises a control head (42) which is arranged radially inwards relative to the filter drum (14) and via which fluid that has entered a respective treatment zone through the filter cells (20) leaves the rotary pressure filter (10),
wherein the control head (42) is divided by control head separating elements (44) into a plurality of discharge zones which adjoin the filter drum (14) and the control head (42) in such a manner that the discharge zones are fluidically sealed with respect to one another,
wherein a hollow element (48, 50) which can be filled with a fluid is arranged adjacent to a control head separating element (44), in particular adjacent to all the control head separating elements (44), in a direction parallel to the axis of rotation (A) of the filter drum (14), in particular on both sides, which hollow element is adapted, by filling of the hollow element (48, 50), to close a gap (52, 54) between the respective hollow element (48, 50) and the control head separating element (44).

10. Rotary pressure filter (10) according to claim 9,
**characterised in that** a sealing strip is associated with the hollow element(s) (48, 50) adjacent to a control head separating element (44) and is arranged adjacent to the hollow element (48, 50) at the gap (52, 54) that is to be closed.

11. Rotary pressure filter (10) according to any one of claims 1 to 10,
**characterised in that** a filter unit (60) is arranged in a filter cell (20), in particular in each filter cell (20), which filter unit carries a filter cloth (64) which is adapted to retain, from a suspension to be filtered that reaches the filter cloth (64), solids above a size defined by the filter cloth (64) and to allow fluids to pass through, wherein the filter cloth (64) and a frame (62) of the filter unit (60) are produced as separate components and connected together using a joining process, in particular a thermal joining process, such as, for example, one of a welding process and an ultrasonic welding process, or wherein the filter cloth (64) and the frame (62) are produced together in one piece, in particular using a 3D printing process.

12. Rotary pressure filter (10) according to any one of claims 1 to 11,
**characterised in that** a second containment (88) is further provided for bearing shields and at the control head (42) of the rotary pressure filter (10).

13. Rotary pressure filter (10) according to claim 11 or 12,
**characterised in that** the filter unit (60) has a seal (68) extending at least partially around the frame (62) of the filter cell (20), which seal is adapted to seal a gap between a filter cell (20) and a filter unit (60) arranged therein, wherein the seal (68) comprises in particular an elastomer material.

14. Rotary pressure filter (10) according to any one of claims 11 to 13,
**characterised in that** the filter unit (60) is configured so as to be removable from the filter cell (20).

15. Rotary pressure filter (10) according to any one of claims 1 to 14,
**characterised in that** housing connectors (18) which are connected to the housing (12) and via which suspension and/or fluid can be introduced into or discharged from the process space (16) are welded to the housing (12).

## Revendications

1. Un filtre rotatif sous pression (10) adapté pour être utilisé pour le traitement de produits médicaux et/ou alimentaires, dans lequel ledit filtre rotatif sous pression (10) comprend :
un tambour de filtre (14) qui peut tourner autour d'un axe de rotation (A),
une pluralité de cellules de filtre (20) qui sont disposées le long d'une périphérie extérieure du tambour de filtre (14) sur celui-ci,
un boîtier (12) qui entoure le tambour de filtre (14), dans lequel un espace de traitement (16) est formé entre le tambour de filtre (14) et le boîtier (12),et au moins un élément de séparation (34), qui divise l'espace de traitement (16) en une pluralité de zones de traitement, dans lequel une connecteur de boîtier (18) est associée à au moins une zone de traitement, par lequel un fluide et/ou une suspension peuvent être introduits dans la zone de traitement respective,
dans lequel les zones de traitement sont séparées les unes des autres de telle sorte que le fluide/la suspension est essentiellement empêché de passer d'une zone de traitement à une autre zone de traitement adjacente selon la rotation du tambour de filtre (14),
dans lequel ledit au moins un élément de séparation (34) est conçu pour empêcher une accumulation permanente de fluide dans la région de l'élément de séparation (34),
dans lequel le tambour de filtre (14) est étanche par rapport au boîtier (12) de telle sorte que le fluide/la suspension d'au moins une zone de traitement est sensiblement empêché de sortir de la zone de traitement correspondante autrement que par des cellules de filtre (20) se trouvant dans la zone de traitement, et en ce qu'un dépôt permanent de fluide/suspension est empêché dans la zone d'une transition entre le tambour de filtre (14) et le boîtier (12),
**caractérisé en ce que,**
au voisinage d'au moins un des éléments de séparation (34), en particulier de tous les éléments de séparation (34), dans une direction parallèle à l'axe de rotation (A) du tambour de filtre (14), en particulier des deux côtés, un élément creux élastique (26') pouvant être rempli d'un fluide est disposé, lequel est conçu pour fermer une fente entre l'élément creux respectif (26') et l'élément de séparation (34) en remplissant l'élément creux (26').

2. Le filtre rotatif sous pression (10) selon la revendication 1,
**caractérisé en ce qu'**une bande d'étanchéité (28, 28') est associée à un élément creux (26, 26') et est disposée de manière adjacente à celui-ci au niveau de la fente à fermer, dans lequel la bande d'étanchéité (28, 28') comprend avantageusement un matériau PTFE.

3. Le filtre rotatif sous pression (10) selon la revendication 1 ou 2,
**caractérisé en ce qu'**il est prévu sur le tambour de filtre une bande de nettoyage tournant conjointement avec celui-ci, le long de laquelle sont disposées plusieurs buses, par exemple des buses à jet plat.

4. Le filtre rotatif sous pression (10) selon l'une des revendications 1 à 3,
**caractérisé en ce qu'**à un élément creux (26, 26') est associé un élément coulissant (30, 30') qui est disposé entre l'élément creux (26, 26'), au voisinage de celui-ci, et un composant du filtre rotatif sous pression (10) déplaçable par rapport à celui-ci, en particulier le tambour de filtre (14).

5. Le filtre rotatif sous pression (10) selon la revendication 4,
**caractérisé en ce que** l'élément coulissant (30, 30') est fixé sur un même composant que celui sur lequel est fixé l'élément creux (26, 26').

6. Le filtre rotatif sous pression (10) selon l'une des revendications 1 à 5,
éventuellement selon la revendication 2 et/ou la revendication 4,
**caractérisé en ce qu'**au moins l'un de l'élément creux (26, 26'), de la bande d'étanchéité (28, 28') et de l'élément coulissant (30, 30') est de forme annulaire.

7. Le filtre rotatif sous pression (10) selon la revendication 6, éventuellement selon la revendication 2 et/ou la revendication 4,
**caractérisé en ce qu'**au moins l'un de l'élément creux (26, 26'), de la bande d'étanchéité (28, 28') et de l'élément coulissant (30, 30') est disposé de manière sensiblement concentrique à l'axe de rotation (A) du tambour de filtre (14).

8. Le filtre rotatif sous pression (10) selon l'une des revendications 1 à 7,
**caractérisé en ce que** les composants formant le joint d'étanchéité (24) du tambour de filtre (14) par rapport au boîtier (12) sont également les composants formant le joint d'étanchéité (36) des éléments de séparation (34) par rapport au boîtier (12).

9. Le filtre rotatif sous pression (10) selon l'une des revendications 1 à 8,
**caractérisé en ce que** le filtre rotatif sous pression (10) comprend en outre une tête de commande (42) qui est disposée radialement vers l'intérieur par rapport au tambour de filtre (14) et par l'intermédiaire de laquelle le fluide, qui a traversé les cellules de filtre (20) dans une zone de traitement respective, quitte le filtre rotatif sous pression (10),
dans lequel la tête de commande (42) est divisée par des éléments de séparation de tête de commande (44) en une pluralité de zones d'évacuation qui sont adjacentes au tambour de filtre (14) et à la tête de commande (42), de sorte que les zones d'évacuation sont étanches au fluide les unes par rapport aux autres,
dans lequel un élément creux (48, 50) pouvant être rempli d'un fluide est associé à un élément de séparation de tête de commande (44), en particulier tous les éléments de séparation de tête de commande (44), sont disposés dans une direction parallèle à l'axe de rotation (A) du tambour de filtre (14), en particulier des deux côtés, lequel est conçu pour fermer une fente (52, 54) entre l'élément creux respectif (48, 50) et l'élément de séparation de tête de commande (44) en remplissant l'élément creux (48, 50).

10. Le filtre rotatif sous pression (10) selon la revendication 9,
**caractérisé en ce qu'**une bande d'étanchéité est associée à l'élément ou aux éléments creux (48, 50) adjacents à un élément de séparation de tête de commande (44) et est disposée de manière adjacente à l'élément creux (48, 50) au niveau de la fente (52, 54) à fermer.

11. Le filtre rotatif sous pression (10) selon l'une des revendications 1 à 10,
**caractérisé en ce que** dans une cellule de filtre (20), en particulier dans chaque cellule de filtre (20), est disposée une unité de filtre (60) qui porte un tissus filtrant (64) qui est agencée pour retenir, à partir d'une suspension à filtrer qui atteint le tissus filtrant (64), des matières solides d'une taille définie par le tissus filtrant (64) et pour laisser passer des fluides,
dans lequel le tissu filtrant (64) et un cadre (62) de l'unité de filtre (60) sont fabriqués en tant que composants séparés et sont reliés l'un à l'autre en utilisant un procédé d'assemblage, en particulier un procédé d'assemblage thermique, comme par exemple l'un d'un procédé de soudage et d'un procédé de soudage par ultrasons, ou dans lequel le tissu filtrant (64) et le cadre (62) sont fabriqués ensemble en une seule pièce, en particulier en utilisant un procédé d'impression tridimensonnelle.

12. Le filtre rotatif sous pression (10) selon l'une des revendications 1 à 11,
**caractérisé en ce qu'**il est prévu en outre un second confinement (88) sur les flasques ainsi que sur la tête de commande (42) du filtre rotatif sous pression (10).

13. Le filtre rotatif sous pression (10) selon la revendication 11 ou 12,
**caractérisé en ce que** l'unité de filtre (60) présente un joint d'étanchéité (68) entourant au moins partiellement le cadre (62) de la cellule de filtre (20), lequel est conçu pour rendre étanche une fente entre une cellule de filtre (20) et une unité de filtre (60) disposée dans celle-ci, dans lequel le joint d'étanchéité (68) comprend en particulier un matériau élastomère.

14. Le filtre rotatif sous pression (10) selon l'une des revendications 11 à 13,
**caractérisé en ce que** l'unité de filtre (60) est conçue de manière à pouvoir être retirée de la cellule de filtre (20).

15. Le filtre rotatif sous pression (10) selon l'une des revendications 1 à 14,
**caractérisé en ce que** des connecteurs de boîtier (18) reliées au boîtier (12), par lesquelles la suspension et/ou le fluide peuvent être introduits ou évacués dans ou hors de l'espace de traitement (16), sont soudées au boîtier (12).
